# EUROPÄISCHE PATENTSCHRIFT

(11) **EP 0 541 640 B1**
(45) Veröffentlichungstag und Bekanntmachung des Hinweises auf die Patenterteilung: **20.03.1996**
(21) Anmeldenummer: 91913960.0
(22) Anmeldetag: 31.07.1991
(51) Int. Cl.: G11B 7/24

(54) **VERFAHREN ZUR LICHTINDUZIERTEN ORIENTIERUNG FLÜSSIGKRISTALLINER POLYMERE ZUR REVERSIBLEN INFORMATIONSSPEICHERUNG**
PROCESS FOR LIGHT-INDUCED ORIENTATION OF LIQUID CRYSTAL POLYMERS FOR THE PURPOSE OF REVERSIBLE DATA STORAGE
PROCEDE D'ALIGNEMENT INDUIT PAR LA LUMIERE DANS POLYMERES EN CRISTAUX LIQUIDES A DES FINS D'ENREGISTREMENT REVERSIBLE DE DONNEES

(30) Priorität: 02.08.1990 DD 34319; 02.08.1990 DD 34320
(43) Veröffentlichungstag der Anmeldung: 19.05.1993
(73) Patentinhaber: Agfa-Gevaert AG, D-51373 Leverkusen (DE)
(72) Erfinder: STUMPE, Joachim, D-1055 Berlin (DE); WOLF, Karin, D-1055 Berlin (DE); ZAPLO, Olaf, D-1058 Berlin (DE); KRÜCKE, Bernd, D-4020 Halle (DE); KREYSIG, Dieter, D-1100 Berlin (DE); MÜLLER, Lutz, D-1058 Berlin (DE); HAUCK, Gerd, D-1093 Berlin (DE); KOSWIG, Hans-Dieter, D-1199 Berlin (DE); RÜBNER, Joachim, D-1055 Berlin (DE); RUHMANN, Ralf, D-1144 Berlin (DE)
(86) Internationale Anmeldenummer: EP9101437
(87) Internationale Veröffentlichungsnummer: WO9202930

(56) Entgegenhaltungen:
- EP-A- 0 090 282
- EP-A- 0 231 857
- EP-A- 0 322 708
- EP-A- 0 333 022
- EP-A- 0 369 432
- EP-A- 0 376 310
- DE-A- 3 623 395
- US-A- 4 810 433
- ACTA OLYMERIC Bd. 39, Nr. 11, 1988, BERLIN, Seiten 607-613; B. KRüCKE ET AL.: 'THERMOTROP KRISTALLIN-FLUESSIGE POLYMERE'

## Beschreibung

Die Erfindung betrifft ein Verfahren zur photoinduzierten Orientierung flüssigkristalliner Polymerer zur reversiblen optischen Informationsspeicherung unter Verwendung von photoinduziert konformationsveränderlichen flüssigkristallinen Seitenkettenpolymeren.

Die Entwicklung von Medien, deren optische Eigenschaften (Absorption, Reflexion, Doppelbrechung, Streuung) lokal reversibel oder irreversibel mittels Licht durch physikalische oder photochemische Prozesse geändert werden können, ist von großem Interesse für die optische Informationsspeicherung und die Displaytechnik.

Irreversible optische Speicher, die auf dem Einprägen (CD-ROM) oder Einbrennen von Löchern in Polymere oder dünne Metallschichten, dem Erzeugen von Blasen in dünnen Metallschichten auf meist polymeren Substraten oder dem Einschmelzen von Vertiefungen in dünne Schichten beruhen, können durch verschiedene photochemische Varianten mit polymeren und/oder organischen Materialien ergänzt werden. So können optische Eigenschaften durch Photopolymerisation oder lichtinduzierte Zersetzung sowie Modifizierung von im nahen IR empfindlichen Verbindungen geändert werden (G. Kämpf, Ber. Bunsengesell, 89, 1179 (1985)).

Für die löschbare reversible optische Datenspeicherung kommen neben magneto-optischen Speichern und Phasen-Umwandlungssystemen auch photochrome Verbindungen in Betracht, die durch Licht die Farbe, das Reflexionsvermögen und andere optische Eigenschaften ändern (G. Kämpf, Kunststoffe 76, 1077 (1986)).

Derartige Systeme zeichnen sich durch ihre erheblich einfachere und damit billigere Herstellung aus, indem Sputtertechniken durch Spincoaten ersetzt werden. Weitere Vorteile bestehen in höheren Speicherdichten sowie einem wesentlich besseren Signal-Rausch-Verhältnis, Gegen löschbare optische Datenspeicher auf Basis optisch oder thermisch schaltbarer bistabiler photochromer Verbindungen spricht die begrenzte Beständigkeit photochromer Systeme bei hohen Lese/Lösch-Einschreib-Zyklenzahlen.

In der Flüssigkristall-Display-Technologie sind laseradressierte Displays mit niedermolekularen Flüssigkristallen seit einigen Jahren als Anzeigedisplay oder Memory bekannt (W.E. Haas u.a., J. Elektrochem, Soc. 121, 1667 (1974), K. Ogura, H. Hirabayashi, A. Uejima, K. Nakamura, Jap. J. Appl. Phys. 21, 969 (1982)). Zur Aufrechterhaltung der Speicherzustände sind jedoch externe Felder erforderlich, außerdem begrenzt die hohe Beweglichkeit das Auflösungsvermögen und damit die Speicherdichte in erheblichem Maße,

Flüssigkristalline Seitenkettenpolymere kombinieren flüssigkristalline Eigenschaften, insbesondere deren supramolekulare Ordnung, Orientierbarkeit und die Anisotropie physikalischer Eigenschaften, mit polymerspezifischen Eigenschaften, wie insbesondere die Ausbildung eines Glaszustandes.

Eine bekannte Möglichkeit zum Einschreiben von Informationen in dünne flüssig-kristalline Polymerfilme besteht in lokalem Aufheizen in den isotropen Zustand mittels einer externen Wärmequelle, vorzugsweise durch einen Laserstrahl, wodurch lichtstreuende, aus vielen Domänen bestehende Bereiche beim Abkühlen des Spots entstehen. Diese makroskopisch unorientierten Bereiche, die Variationen optischer Eigenschaften aufweisen, können im Glaszustand des Polymeren eingefroren werden. Dieses als Thermorecording bekannte Verfahren wird in DE 3 603 268 A1 und DE 3 603 267 A1 (1986) beschrieben. Dieses Verfahren ist in zahlreichen Varianten für flüssigkristalline Haupt- und Seitenkettenpolymere ohne oder in Kombination mit externen elektrischen oder magnetischen Feldern, mit makroskopisch orientierten oder unorientierten Proben und bei Variation der Einschreibetemperaturen bekannt. Die Nachteile dieses Verfahrens bestehen in der hohen erforderlichen Laserleistung für den Einschreibvorgang und der geringen Auflösung,

Solche Phasenübergänge können aber auch durch photochemische Reaktionen photochromer niedermolekularer Flüssigkristalle oder photochromer flüssigkristalliner Polymere oder durch den Zusatz von photochromen Verbindungen zu Flüssigkristallen oder flüssigkristallinen Polymeren erzielt werden. So kann die photoinduzierte Änderung der geometrischen Form von Molekülen, beispielsweise durch E-Z-Photoisomerisierungen von Azochromophoren, als Störung für das gesamte flüssigkristalline System wirken, wodurch photochemisch die Phasenübergangstemperatur reduziert oder ein Phasenübergang induziert wird (T. Ikeda, Macromol. 23, 36 und 42 (1990)).

Eich und Wendorff (Makromol. Chem. Rapid commun. 8, 59 (1987) und 8, 467 (1987); DE 3 623 395 A1) beschreiben die löschbare optische Datenspeicherung mit photochromen Seitenkettenpolymeren im Glaszustand der Polymeren. Diese laserinduzierte Refraktionsindexänderung wird durch eine Kombination photochemischer und thermischer Effekte verursacht, wobei die photogenerierten Z-Azobenzenchromaphoren lokal die flüssigkristalline Ordnung des Polymeren stören und zu einer Variation optischer Eigenschaftsänderungen führen. Diese lokale Störung der mesogenen Matrix bleibt auch dann erhalten, wenn die Azochromophoren zurück zur thermodynamisch stabilen E-Form relaxieren. Der gesamte Vorgang bewirkt eine signifikante Änderung des Brechungsindexes. Dieses Verfahren hat den Vorteil, daß es mit geringeren Schreiblaser-Intensitäten und bei Raumtemperatur im Bereich des Glaszustandes des Polymeres erfolgt. In DE 3 623 395 A1 wird eine Vorrichtung für eine solche reversible Informationsspeicherung beschrieben. Ein optisches Aufzeichnungsmedium für reversible Aufzeichnung/Löschung ist weiterhin aus EP-A 0 369 432 bekannt.

In jüngster Zeit wurde bei Bestrahlung von Azoverbindungen mit linear polarisiertem Licht im Glaszustand amorpher Polymere nachgewiesen, daß durch das Prinzip der winkelabhängigen Photoselektion ein schwacher Dichroismus und eine schwache Doppelbrechung erzeugt werden kann (A. Kozak, G. Williams, Mol, Phys. 67, 1065 (1989)).

Birenheide konnte an azochromophorhaltigen flüssigkristallinen Seitenkettenpolymeren (K. Anderle, R. Birenheide, M. Eich, J.H. Wendorff, Makromol. chem., Rapid Commun. 10, 477 (1989)) zeigen, daß dieser Vorgang in anisotropen Polymeren auf Grund der unterschiedlichen Verteilungsfunktion der Orientierung der Azochromophoren hinsichtlich der Variation optischer Eigenschaften wesentlich effizienter verläuft. Birenheide wies jedoch für dieses Verfahren und diese Speichermedien nach, daß im Glaszustand nur eine Umorientierung der Azochromophoren als völlig lokaler Prozeß erfolgt, der die benachbarten Seitenketten des Polymeren und damit die flüssigkristalline Matrix nicht stört (K. Anderle, R. Birenheide, J.H. Wendorff, 19. Freiburger Arbeitstagung Flüssigkristalle 1990).

Es ist also in den vergangenen Jahren gelungen, die notwendigen Einschreibenergien durch eine verfeinerte Nutzung der molekularen Wechselwirkungen, bei der photochemisch induzierten Eigenschaftsänderung, beispielsweise bis in den Bereich mW/cm zu vermindern. Bei dieser Technik wurden flüssigkristalline Polymere verwendet, die in der Seitenkette eine photoaktive Gruppe, das ggf. substituierte Azobenzol allein oder als Copolymer, mit einer die Ordnung im flüssigkristallinen Zustand bewirkenden Einheit, einem Aryl-Ester der p-Oxy-benzoesäure enthielten. Das Stützgerüst, die polymere Hauptkette, ist üblicherweise ein ggf. modifiziertes Poly(meth)-acrylat oder ein Polysiloxan. Diese Systeme sind für eine Einspeicherung von Informationen gut geeignet, weil sie niedrige Einschreibenergien verlangen und hohe Speicherdichten erlauben. Es wurde nachgewiesen, daß dies unterhalb von Tg (Glastemperatur) ein lokaler Prozeß ist und darauf beruht, daß nur die direkt an der Photoisomerisierung beteiligten Moleküle ihre Lage ändern und selbst die nächsten Nachbarn von diesem Prozeß unberührt bleiben (Anderle, Birenheide, Wendorff, 19. Freiburger Arbeitstagung Flüssigkristalle 4.-6. April 1990, Freiburg, Ref. 13). Diese Systeme mit kurzreichender Wechselwirkung unterliegen einer raschen physikalischen Alterung, weil bei der cis-trans Rückreaktion der Ausgangszustand der Domäne nicht wieder erreicht wird. Infolgedessen muß sich das System beim wiederholten Durchlaufen des Kreisprozesses rasch von seinen Startbedingungen entfernen und einer neuen Konfiguration zustreben. Diese Eigenschaft macht sie für eine praktische Anwendung weitgehend ungeeignet.

Es wurde nun überraschend gefunden, daß es photoinduziert konformationsveränderliche ("photochrome"), flüssigkristalline Polymere der idealisierten allgemeinen Formel I 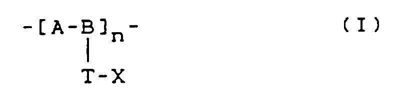 gibt, bei denen eine weitreichende Wechselwirkung eintritt. Dies bedeutet, daß die Wirkung des photoinduziert konformationsveränderten Moleküls spontan die ganze Domäne erfaßt, ein Prozeß, der auch unterhalb von Tg abläuft. Die Domäne kehrt somit zum Ausgangszustand, aber mit veränderter Orientierungsverteilung der photoinduziert konformationsveränderlichen und mesogenen Einheiten zurück, das System altert physikalisch im Prinzip nicht. Dies ist die Voraussetzung für die Entwicklung eines Verfahrens zur reversiblen optischen Informationsspeicherung mittels photoinduziert konformationsveränderlicher flüssigkristalliner Seitenkettenpolymere als Speichermedien, wobei das vorgeschlagene Verfahren Grenzen herkömmlicher photochromer Systeme in Polymeren überwinden und bei extrem niedrigen Lichtintensitäten zu hohen Werten der photoinduzierten Anisotropie, zu hohen Kontrastwerten, zu einem hohen Verstärkungsfaktor, zu hoher Langzeitstabilität der gespeicherten Information, zu einer hohen Reversibilität und zu einer einfachen Löschbarkeit der Information führen soll und die lichtinduzierte makroskopische Orientierung flüssigkristalliner Seitenkettenpolymere gestatten soll.

In der Formel I bedeutet A-B die wiederkehrende Einheit der Hauptkette des Polymeren, das sog. "Backbane", T steht für die abstandhaltenden Gruppen, die sog. "Spacer" und X für die den flüssigkristallinen Zustand bestimmenden mesogenen Seitenketten, n steht für eine ganze Zahl. Die Gruppe A-B steht vorzugsweise entweder für die bei der radikalischen Polymerisation von Vinylverbindungen des Typs A'=B' entstehende Einheit, womit den eingesetzten Monomeren die allgemeine Formel A'=B'-T-X zukommt oder für die bei der Umsetzung von Polysiloxanen mit 1,2-Olefinen, die sich beispielsweise nach der allgemeinen Gleichung -[A-B]p- + n T-X mit n ≤ p bilden, wobei p für eine ganze Zahl steht.

A'=B' ist bevorzugt die Gruppe 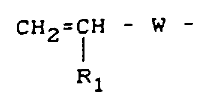 worin R₁ für H oder Methyl steht.

W ist ein Rest, der die Doppelbindung aktiviert, beispielsweise -CO-O-, -CO-N(R₂)-, -CO-, mit R₂ für H oder C₁-C₆-Alkyl.

Eine weitere bevorzugte Gruppe sind Verbindungen, bei denen in Formel I A-B für 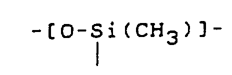 steht.

Die abstandhaltenden Gruppen T sind bewegliche Ketten mit 3 - 11 C-Atomen, vzw. CH₂-Gruppen, die ggf. substituiert, bspw. durch Halogen wie Chlor oder durch Heteroatome bspw. durch O-Atome unterbrochen sein können. Das Mesogen X ist im allgemeinen mit dem Spacer über ein Bindeglied verbunden, das beispielsweise wie folgt ausgebildet sein kann:
-O-, -CO-, -CO-N(R₂)-, -N(R₂)-CO-, -CO-O-,
wobei R₂ die oben angegebene Bedeutung hat.

Es gibt zahlreiche mesogene Seitenketten, eine umfangreiche Auswahl von ihnen findet man im "Handbuch der Flüssigkristalline" (Kelker und Hatz, Verlag Chemie 1980, S. 67-113).

Gegenstand der Erfindung ist ein Verfahren zur photoinduzierten Orientierung flüssigkristalliner Polymerer und zur reversiblen optischen Informationsspeicherung mittels photoinduziert konformationsveränderlicher flüssigkristalliner Polymerer als Speichermedium, das dadurch gekennzeichnet ist, daß in einem homöotropen, planaren oder makroskopisch desorientierten, durch Spin-coaten, Tauchen, Gießen oder durch Pressen oder Einfließen zwischen zwei Glasplatten hergestellten Film eines photoinduziert konformationsveränderlichen flüssigkristallinen Seitenkettenpolymers gemäß einer der folgenden Formeln 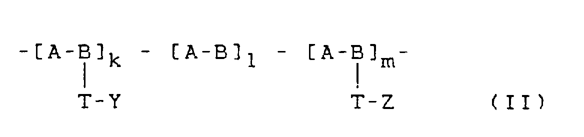 mit k+l+m = 1 und 0<k<1 und 0,05 < m < 0,5
oder 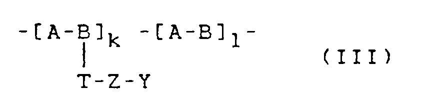 mit k+l = 1 und 0<k≤1
worin
- A-B: die wiederkehrende Einheit der Hauptkette von Polysiloxan, Polyacrylat oder Polymethacrylat,
- T: eine abstandthaltende Gruppe,
- Y: eine Gruppe mit mesogenen Eigenschaften, die mindestens eine wasserstoffbrückenbildende Einheit enthält,
- Z: eine Gruppe mit photoinduziert konformationsveränderlichen Eigenschaften
ist und k, l, m das Verhältnis der Einheiten A-B untereinander bestimmen,
im viskoelastischen Bereich oder unterhalb der Glastemperatur des Polymers bildmäßig oder lokal mit linear polarisiertem oder im Falle eines homöotrop orientierten Films mit polarisiertem oder unpolarisiertem, aktinischen Licht eine Information eingeschrieben wird oder Pixel verschiedener Polarisationsrichtungen eingeschrieben werden und daß bei jedem Einschreibvorgang eine über eine photoinduzierte Konformationsänderung der photoinduziert konformationsveränderlichen Gruppen eine Umorientierung der gesamten Flüssigkristallmatrix bis zu einer Orientierung der in den Seitenketten enthaltenen photoinduziert konformationsveränderlichen und mesogenen Gruppen senkrecht zur Polarisationsebene des Einschreiblichtes erfolgt und makroskopisch einheitlich eine homöotrope Schicht zu einer planaren Schicht und/oder die Vorzugsrichtung einer planaren Schicht durch Variation der Polarisationsebene des Lichtes in beliebige planare Vorzugsrichtungen umorientiert wird.

Von besonderer Bedeutung für die Erfindung ist die Ausbildung eines flüssigkristallinen Zustandes, der durch die Seitenketten des Polymers bestimmt wird, in denen sowohl eine mesogene Gruppe Y als auch eine photoinduziert konformationsveränderliche Gruppe Z enthalten sein muß. Z muß nicht notwendigerweise mesogen sein. Es ist aber bevorzugt, wenn beide Gruppen mesogene Eigenschaften haben. Mithin muß das Polymer der Formel I nach vorliegender Erfindung entweder dem Zusammenhang der idealisierten Formel II 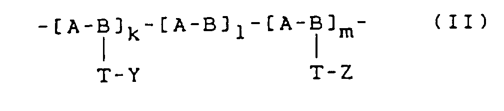 mit k+l+m=1 und 0<k<1 und 0,05<m<0,5, wobei k, l, m das Verhältnis der Einheiten A-B untereinander bestimmen, oder dem der idealisierten Formel III genügen: 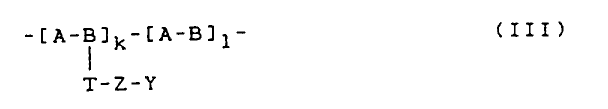 mit k+l=1 und 0<k≤1

Für den erfindungsgemäßen Zweck müssen Y und Z in einem kooperativen Verhältnis zueinander stehen: die von Z ausgehende Konformationsänderung muß sich spontan auf die ganze Domäne übertragen, sodaß im Endeffekt eine Änderung der optischen Achse des Gesamtsystems resultiert. Hierbei ist es unerheblich, ob der Prozeß ein oder mehrstufig abläuft, was letztlich nur von der jeweiligen Lage des photostationären Gleichgewichts abhängt. Die Tatsache der weitreichenden Wechselwirkung ist das Entscheidende. Die photoinduziert konformationsveranderliche Gruppe Z entspricht bevorzugt der Formel IV 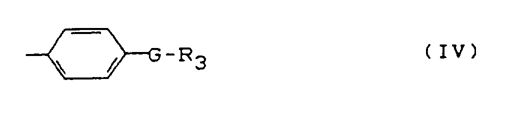 worin
- G: für die Gruppen -N=N-, -C(R₄)=C(R₄)-, -N=CH-, -CH=N- oder -CH=CH-CO- und
- R₃: für -Ar-R₅, den Pyridin- oder Pyrimidinrest oder COOR₆ steht,
oder der Formel V 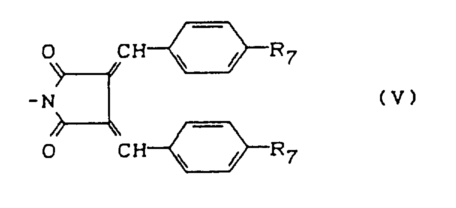 Es steht
- R₄: unabhängig voneinander für H, Alkyl oder CN,
- R₅: für H, COOR₆, R₈, O-R₈, CN, NO₂, CF₃, Halogen, N(R₈)(R₈), Aryl,
- R₆: für C₁-C₆-Alkyl, den Cyclohexyl-4-carbonsäure-4'-alkyl-phenylester-, den Cyclhexyl-4-carbonsäure-4'-alkyl-cyclohexylester-, den Cholesteryl- oder Cholestanyl-Rest,
- R₇: für H, Alkyl, O-Alkyl, Halogen, CN oder CF₃ und
- R₈: unabhängig voneinander für H, C₁-C₁₄-Alkyl, Acyl, Aroyl, bevorzugt CH₃-CO- oder C₆H₅-CO-.

Bei dem Rest -Ar-R₅ ist die p-Stellung bevorzugt.

Die mesogene Gruppe Y entspricht ebenfalls bevorzugt der Formel IV, worin G die Bedeutung einer wasserstoffbrückenbildenden Einheit, vorzugsweise -CO-NH-, -NH-CO- oder -C(R₄)=C(R₄)-CO-NH- hat.

Bei einer bevorzugten Ausführungsform enthält die durch Z dargestellte Gruppe mit photoinduziert konformationsveränderlichen Eigenschaften eine Gruppierung der folgenden Formel VI 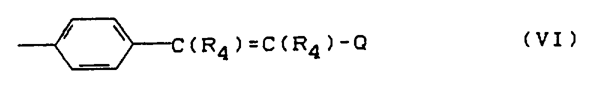 worin Q und R₄ bedeuten:
a) -COOR₆, mit
   - R₆=: C₁-C₆ Alkyl, 4-Alkylcyclohexyl, 4-Alkylphenyl, 4-Alkoxyphenyl, cylohexyl-4-carbonsäure-4'-alkyl-phenylester, Cyclohexyl-4-carbonsäure-4'-alkyl-cyclohexylester, Cholesteryl oder Cholestanyl und
   - R₄ =: H
b) 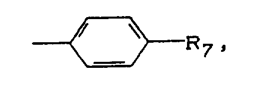 mit
   - R₇ =: H, Alkyl, O-Alkyl, Halogen, CN oder CF₃ und
   - R₄ =: H, Alkyl oder CN
c) R₉, mit
   - R₉=: Pyridyl oder Pyrimidyl und
   - R₄ =: H
   oder
d) 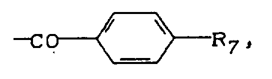 mit
   - R₇ =: H, Alkyl, O-Alkyl, Halogen, CN oder CF₃ und
   - R₄ =: H.

Bei einer weiteren bevorzugten Ausführungsform entspricht das Seitenkettenpolymer der Formel III, worin A-B für die wiederkehrende Einheit der Hauptkette eines Polymethylsiloxans steht und die durch Z dargestellte Gruppe mit photoinduziert konformationsveränderlichen Eigenschaften eine Gruppierung der folgenden Formel enthält: 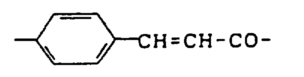 Als optisches Speichermedium eignen sich besonders die folgenden Seitenkettenpolymere:
a) Poly-(4-methacryloyl-oxy-hexylenoxy-benzoesäure-4'-methoxyanilid-co-methacryloyloxyhexylenoxy-azobenzen)
b) Poly-(methacryloyloxyhexyl-oxy-4-methoxy-phenyl-benzoat-co-methacryloyloxyhexyloxy-4-methoxystilben)
c) Poly-{3[(4-cholesteryl)oxycarbonylvinylphenoxy]-propyl}-methylsiloxan
d) Poly-{3[(4-propylcyclohexyl)oxycarbonylvinylphenoxy]propyl}-methylsiloxan
e) Poly-{3[(4-n-hexyloxyphenylcarbonyloxy)cyclohexyloxycarbonylvinylphenoxy]propyl}-methylsiloxan

Die verwendeten Polymeren sind neu. Sie lassen sich nach bekannten Verfahren und in Analogie zu beschriebenen Synthesen flüssigkristalliner Polymere herstellen und charakterisieren.

Der Polymerisationsgrad der Polymeren beträgt 5 - 600, vorzugsweise ca. 100.

Es muß als außerordentlich überraschend angesehen werden, daß sich durch die an sich geringfügige Änderung im chemischen Aufbau eine vollständige Änderung der Wirkung bei der Umorientierung eintritt: von der vom Rest der Matrix praktisch unabhängigen optischen Reorientierung bei den bekannten Systemen, bewirkt die Einführung der wasserstoffbrückenbildenden Mesogene die Ankopplung der ganzen Domäne an die Photoorientierung, ein Vorgang, der selbst dann noch abläuft, wenn Tg unterschritten wird.

Der Erfindung liegt die Aufgabe zugrunde, ein Verfahren zur lichtinduzierten Orientierung flüssigkristalliner Polymere und zur reversiblen optischen Informationsspeicherung unter Einsatz geeigneter Stoffe zu entwickeln, das Grenzen in der Reversibilität herkömmlicher photochromer Speichermedien und herkömmliche Orientierungsverfahren überwindet. Die Aufgabe wird erfindungsgemäß dadurch gelöst, daß ein Verfahren zur lichtinduzierten, reversiblen Änderung der optischen Anisotropie und Orientierung photochromer flüssigkristalliner Seitenkettenpolymere mit linear polarisiertem oder unpolarisiertem Licht geringer Intensität entwickelt wurde.

Erfindungsgemäß wird die Aufgabe dadurch gelöst, daß in einem homöotropen planaren oder makroskopisch desorientierten Film eines photochrome Seitengruppen enthaltener. füssigkristallinen Polymeren im viskoelastischen Bereich oder unterhalb der Glastemperatur des Polymeren bildmäßig oder lokal mit linear polarisiertem oder im Falle von einem homöotrop orientierten Film mit polarisiertem oder unpolarisiertem, aktinischem Licht eine Information eingeschrieben wird.

Die Informationsspeicherung erfolgt beispielsweise unter Verwendung von Zellen, die aus zwei Glasplatten bestehen, zwischen denen sich eine Schicht des orientierten Seitenkettenpolymeren befindet. Die Innenseiten der Glasoberflächen wurden teilweise mit organischen Polymerschichten, vorzugsweise Polyimid, Siliziumdioxidschichten und/oder leitfähigen ITO-Schichten versehen, die eine makroskopische Orientierung der flüssigkristallinen Polymerschichten durch elektrische oder magnetische Felder und/oder Oberflächenkräfte ermöglichen.

Der benötigte Film wird durch Spin-coaten, Tauchen, Gießen oder durch Pressen oder Einfließen zwischen zwei Glasplatten hergestellt.

Die üblicherweise verwendete Schichtdicke liegt zwischen 5 und 30 µm.

Erfindungsgemäß schaltet bei jedem Einschreibevorgang eine über eine E-Z-Photoisomerisierung ablaufende Photoselektion der photochromen Gruppen eine lichtinduzierte Umorientierung der gesamten Matrix des flüssigkristallinen Polymeren. Dies führt bis zu einer Orientierung der photochromen und mesogenen Seitengruppen senkrecht zur Polarisationsebene des Einschreiblichtes, Eine makroskopisch einheitliche homöotrope Schicht und auch die Vorzugsrichtung einer planaren Schicht wird durch Variation der Polarisationsebene des Lichtes in eine frei wählbare planare Vorzugsrichtung umorientiert.

Durch Variation der Polarisationsebene des aktinischen Lichtes lassen sich auch Pixel verschiedener Polarisationsrichtungen einschreiben.

Die im Speichermedium gespeicherte Information läßt sich durch längerwelliges, linear polarisiertes, nicht aktinisches Leselicht punktweise oder flächig ohne Zerstörung der gespeicherten Information auslesen.

Die Löschung der gespeicherten Information oder Orientierung der flüssigkristallinen Matrix erfolgt gemäß der Erfindung durch Licht und/oder Wärme lokal oder flächig.

Durch thermisches Löschen der Information und bei nachfolgendem Abkühlen aus der isotropen Schmelze wird der Ausgangszustand des Speichermediums von selbst oder durch Anlegen eines elektrischen oder magnetischen Feldes wiederhergestellt.

Erfindungsgemäß ist der zuvor beschriebeneEinschreib-, photochemisch getriggerte Orientierungs-, Lese-, thermische oder photonische Lösch- und Reorientierungsprozeß mehrfach wiederholbar.

Zum Einschreibevorgang werden Lichtquellen verwendet, die im Bereich der Absorption der photochromen Gruppen Licht emittieren, oder die Absorption der photochromen Seitengruppen der verwendeten Polymeren wird der Wellenlänge des Bestrahlungslichtes angepaßt. Die Lichtexposition erfolgt mit jeweils geeigneten Wellenlängen, bei denen das photostationäre Gleichgewicht zwischen den E und Z-Photoisomeren mit hohen Quantenausbeuten und hohem Anteil an Z-Photoisomeren eingestellt wird,

Durch eine wiederholte Photoselektion der photochromen Seitengruppen mit veränderter Polarisationsebene des Lichtes oder mit veränderter Orientierung des planar orientierten Speichermediums zur Polarisationsebene des Einschreibelichtes wird zwischen verschiedenen Vorzugsorientierungen oder Speicherzuständen wiederholt geschaltet und Informationen oder Orientierungen werden korrigiert oder überschrieben. Die eingeschriebene Information kann durch Licht veränderter Polarisationsrichtung ohne thermisches Löschen und ohne das danach notwendige erneute makroskopische Orientieren gelöscht werden. Dieser Schaltvorgang kann mehrfach wiederholt werden und erlaubt eine reversible Informationsspeicherung, die nur durch Licht geschaltet wird. Zum Neueinschreiben von Informationen ist damit ein Löschvorgang nicht erforderlich. Durch Bestrahlung mit unpolarisiertem Licht wird die Vorzugsrichtung ebenfalls aufgehoben und der Speicherzustand verändert,

Bildpunkte mit verschiedener Orientierung werden eingeschrieben und ausgelesen, wenn der Einschreib- und der Leseprozeß mit linear polarisiertem Licht verschiedener Polarisationsrichtung in Ausrichtung zur Vorzugsrichtung des Speichermediums erfolgt.

Durch lichtinduzierte Orientierung werden aus Schichten mit Domänen verschiedener Vorzugsrichtung oder aus makroskopisch einheitlich homöotrop orientierten Schichten photochromer flüssigkristalliner Polymere planar orientierte Schichten hergestellt. Unter Verwendung von linear polarisiertem Licht werden planar orientierte Schichten mit einer Vorzugsrichtung erhalten.

Erfindungsgemäß und in überraschender Weise erfolgt bei dem Verfahren und verwendeten Speichermedien keineswegs nur eine wie bisher erreichte lokale Umorientierung der photochromen Gruppen oder Moleküle, sondern die photoinduzierte Rotationsdiffusion oder winkelabhängige Photoselektion der photochromen Gruppen im Speichermedien schaltet eine Umorientierung der gesamten anisotropen flüssigkristallinen Matrix sowohl im viskoelastischen Bereich und, besonders überraschend, im Glaszustand der Polymeren.

Die Orientierung der photochromen Gruppen und mesogenen Seitengruppen wird kontinuierlich durch die Photoselektion geändert und erfolgt bis zur Ausrichtung der Matrix senkrecht zur Polarisationsebene des Lichtes. Die Information wird mit einem Laser punktförmig oder unter Verwendung einer lithographischen Maske flächig oder mit einer Lampe einer Intensität von 0,1 bis 10 mW/cm⁻ in einer Zeit zwischen 1 und 600 s eingeschrieben. Nach mehrfachen photonischen Schaltprozessen bewirkt ein zwischengeschalteter thermischer Erwärmungsprozeß in den viskoelastischen Bereich der Polymeren die Überwindung von Grenzen herkömmlicher photochromer Speichermedien durch physikalisches Altern.

Das erfindungsgemäß beanspruchte Verfahren zur Informationsspeicherung führt durch die systemspezifische Kombination photochromer Gruppen mit mesogenen Seitenketten bei Bestrahlung mit linear polarisiertem Licht zu einem überraschenderweise extrem effizienten photochemisch induzierten, physikalischen Umorientierungsprozeß, der makroskopisch einheitlich die Orientierung von photochromen und mesogenen Seitengruppen und die effiziente Änderung der Anisotrope optischer Eigenschaften wie Dichroismus und Doppelbrechung schaltet. Als besondere Vorteile des Verfahrens zur Informationsspeicherung und Orientierung flüssigkristalliner Polymere seien genannt:
- hoher Verstärkungsfaktor und damit extrem effizienter Einschreibprozeß durch photochemisch induzierte Umorientierung der photochromen Gruppen und dadurch verursachte physikalische Umorientierung der Gesamtheit der mesogenen Seitengruppen des flüssigkristallinen Speichermediums,
- durch die hohe Effizienz können Lichtquellen geringer Intensität, kurze Bestrahlungszeiten und Polymere mit niedrigem Gehalt an photochromen Gruppen verwendet werden,
- hoher optischer Kontrast durch die Umorientierung der photochromen Gruppen und der nichtphotoreaktiven, mesogenen Seitengruppen,
- prozeßbedingte Entkopplung zwischen Prozeß induzierendem Photoprodukt der photochromen Gruppe und dem auf veränderte Orientierung photochromer und mesogener Seitengruppen beruhenden Speicherzustand, so daß die thermische Stabilität der Photoprodukte keine Rolle spielt,
- einfache thermische Löschbarkeit von Informationen und Orientierungen,
- einfache photonische Löschbarkeit von Informationen und Orientierungen,
- geringe Lichtexposition führt zu hoher Reversibilität und hohen Zyklenzahlen des optischen Informationsspeicherverfahrens,
- Schalten mit Licht verschiedener Polarisationsrichtung zwischen verschiedenen Speicherzuständen, so daß Informationen ortsselektiv oder flächig mit Licht korrigiert oder gelöscht werden, ohne daß sonst übliche thermische Lösch- und erneute Orientierungsprozesse erforderlich sind, dies stellt damit einen völlig neuen Verfahrenstyp der optischen Informationsspeicherung dar,
- durch Bildpunkte verschiedener Polarisationsrichtung wird der Informationsgehalt jedes einzelnen Bildpunktes und damit die eingeschriebene Gesamtinformation und Speicherdichte durch Bildpunkte verschiedener Polarisationsrichtungen erhöht, so daß eine dreidimensionale Informationsspeicherung realisiert wird,
- Ermüdungserscheinungen des Speichermediums infolge wiederholter phototonischer Schaltprozesse werden durch zwischengeschaltete thermische Aufheizung und erneute Orientierung des Mediums behoben, damit wird eine wesentliche Grenze herkömmlicher photochromer Polymere überwunden,
- die Reorientierung einiger Speichermedien durch Erwärmen in die isotrope Schmelze und anschließendes Abkühlen erfolgt zu der ursprünglichen, makroskopisch einheitlich homöotrop orientierten Schicht ohne Verwendung äußerer Felder,
- das Auflösungsvermögen liegt bei Verwendung von UV-Licht und beschriebenen Speichermedien bei 0,5 µm,
- die Information ist bei Raumtemperatur langzeitstabil und bleibt auch bei thermischer Rückreaktion der photochromen Gruppen erhalten,
- makroskopisch einheitliche Orientierung flüssigkristalliner Polymere durch Licht ohne Verwendung von magnetischen oder elektrischen Feldern oder Oberflächenkräften,
- im Gegensatz zu allen anderen bekannten Verfahren der Informationsspeicherung mit photochromen flüssigkristallinen Polymeren und der Orientierung flüssigkristalliner Polymere erfolgt durch dieses Verfahren unterhalb der Glastemperatur eine kooperative Umorientierung photochromer und mesogener Seitengruppen zu makroskopisch einheitlich oientierten Arealen flüssigkristalliner Polymerschichten
- die Vorzugsrichtung planar orientierter Schichten kann in der Ebene allein durch Variation der Polarisationsebene und kontinuierlich durch Lichtintensität und Bestrahlungszeit geändert werden,
- durch die Absorption der photochromen Gruppen ausschließlich im UV-Bereich wird eine Erhöhung der Speicherkapazität im Vergleich zu allen bekannten azochromophorhaltigen Speichermedien erreicht,
- die kurzwellige Absorption der photochromen Gruppen vereinfacht den Lichtschutz der eingeschriebenen Information,
- die signifikante Änderung der Doppelbrechung prädestiniert eine Anwendung des Verfahrens in der reversiblen analogen Datenspeicherung, in der reversiblen digitalen Datenspeicherung oder in der reversiblen synthetischen Holografie,
- das Verfahren gestattet, Filme photochromer flüssigkristalliner Polymere in verschiedenen Anwendungen, so zum Beispiel als Orientierungsschicht, durch Licht makroskopisch einheitlich zu orientieren.

Das vorgeschlagene Verfahren zur reversiblen optischen Informationsspeicherung und lichtinduzierten Orientierung flüssigkristalliner Polymere auf Basis eines durch linear polarisiertes Licht photochemisch induziertem physikalischen Umorientierungsverfahrens mit bisher unbekannten photochromen flüssigkristallinen Polymeren im viskoelastischen Bereich und unterhalb der Glastemperatur war aus bisher bekannten Publikationen und Patenten nicht ableitbar und weist in der Effizienz, im Kontrast, in der Reversibilität, in der Speicherdichte und lichtinduzierten Prozeßschritten besonders gute Eigenschaften gegenüber allen bisher bekannten Verfahren und Systemen auf.

### Beispiele

### Beispiel 1

Die Speicherzelle besteht aus zwei mit einer Polyimidschicht überzogenen Glasplatten und einer dazwischen befindlichen Schicht des flüssigkristallinen Polymeren Poly-{3[(4-propylcyclohexyl)oxycarbonylvinylphenoxy]-propyl}-methylsiloxan als Speichermedium. Durch Erwärmen des Polymeren in die isotrope Schmelze, Pressen im viskoelastischen Bereich 5°C unterhalb des Phasenüberganges nematisch-isotrop bei 93°C und anschließendes zweistündiges Tempern bei dieser Temperatur wurde das Polymere orientiert. Die Zelle wurde langsam auf Raumtemperatur abgekühlt. Das smektische Polymere weist in der Zelle große homöotrop orientierte Domänen auf.

Das Speichermedium in der Zelle wurde mit unpolarisiertem oder linear polarisiertem, unter Verwendung von Polarisationsfolien, Licht der Wellenlänge 313 nm einer HBO 500 in Verbindung mit einem Metallinterferenzfilter bei einer Strahlungsleistung von 0,5 mW/cm 140s bildmäßig bestrahlt.

Mit einem UV-Spektrometer wird als Folge der Lichtexposition eine drastische Zunahme der Extinktion im Bereich der Absorption der Cinnamoylgruppen als Funktion der Bestrahlungszeit gemessen. Das Experiment beweist die lichtinduzierte Änderung der optischen Anisotropie durch Veränderung des dichroitischen Verhältnisses der photochromen Gruppen.

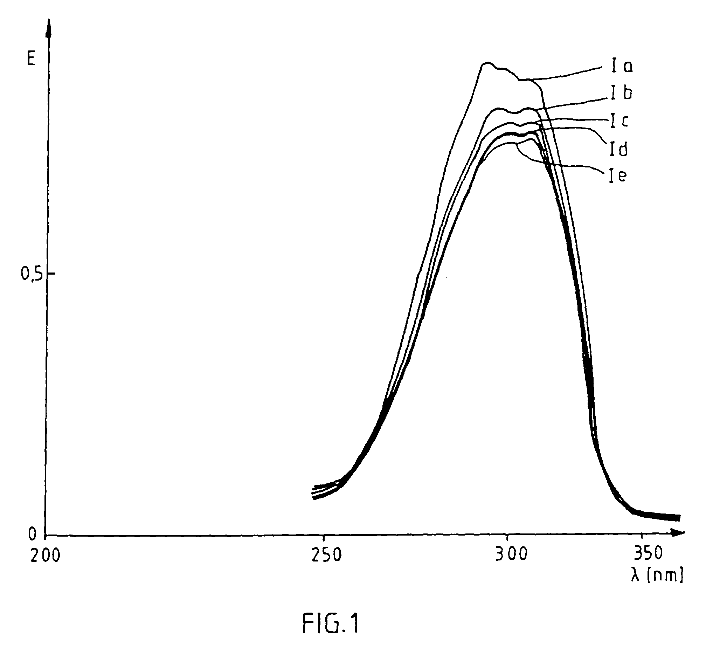

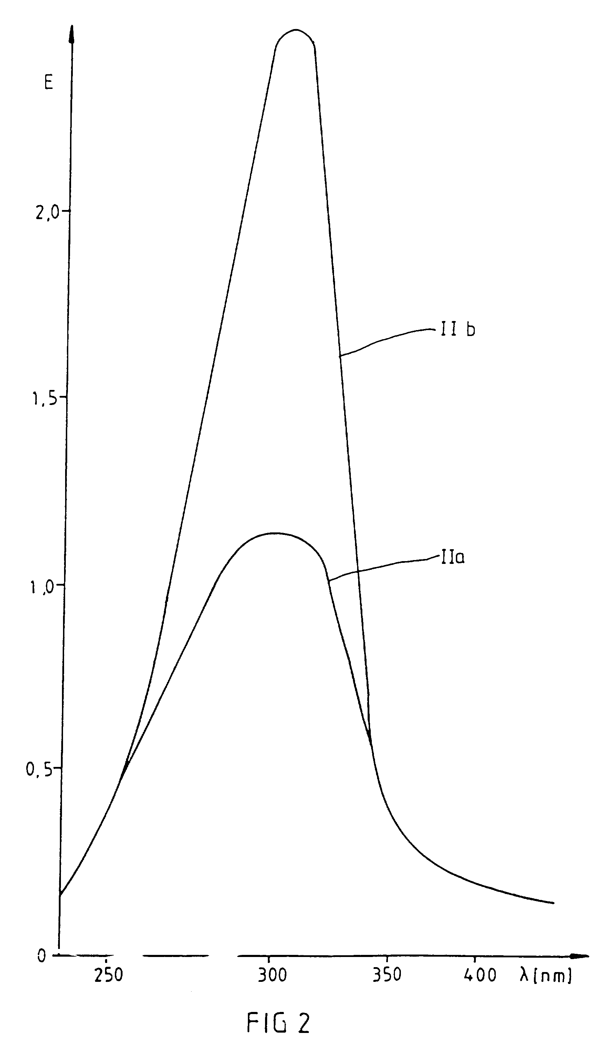

Das typische Abbauspektrum für die Photolyse in Lösung, wobei als Lösungsmittel Cyclohexan verwendet wurde, ist in Fig.1 (Ia: zu Beginn der Photolyse; Ib,c,d,e: nach 10,20,40,200s Photolyse) dargestellt. Durch die Photolyse der Cinnamoylgruppe in Lösung und in amorphen Polymeren erfolgt stets eine Abnahme der Extinktion. Im homöotropen Film des gleichen Polymeren wird bei vergleichbaren Bestrahlungsbedingungen eine signifikante Zunahme der Extinktion beobachtet (Fig.2; IIa: zu Beginn der Photolyse; IIb: nach 140s Photolyse).

Mit einem Polarisationsmikroskop wird eine Änderung der Doppelbrechung zwischen bestrahlten und unbestrahlten Filmen nachgewiesen. Damit wird die Änderung einer homöotropen Orientierung in eine planare Orientierung der gesamten flüssigkristallinen Matrix belegt. Die eingeschriebene Information wird durch die Extinktionszunahme im Bereich der Cinnamoylabsorption durch UV-Licht oder durch längerwelliges, linear polarisiertes nicht aktinisches Licht, Wellenlänge vorzugsweise größer 350 nm, ausgelesen. Die eingeschriebene Information ist im Glaszustand und im viskoelastischen Bereich stabil. Die eingeschriebene Information oder Orientierung wird durch Wärmezufuhr gelöscht. Das flüssigkristalline Speichermedium orientiert sich beim Abkühlen aus der isotropen Schmelze von selbst oder unter zusätzlichem Anlegen eines magnetischen Feldes zur ursprünglichen homöotropen Orientierung zurück. Der Einschreib-, Lese-, Lösch- und Orientierungsprozeß ist mehrfach wiederholbar.

### Beispiel 2

Unter Verwendung der im Beispiel 1 beschriebenen Speicherzelle und Bestrahlungsbedingungen werden mit polarisiertem Licht der Wellenlänge größer 300 nm bei Variation der Polarisationsebene Areale verschiedener Vorzugsorientierung der planaren Schichten bei vergleichbaren Bestrahlungszeiten eingeschrieben und polarisationsmikroskopisch ausgelesen.

### Beispiel 3

Unter Verwendung der im Beispiel 1 beschriebenen Speicherzelle und Bestrahlungsbedingungen wird mit polarisiertem Licht der Wellenlänge größer 300 nm eine Vorzugsorientierung eingeschrieben und polarisationsmikroskopisch ausgelesen. Wird erneut mit polarisiertem Licht jedoch veränderter Orientierung zwischen Polarisationsebene des Lichtes und dem Speichermedium eingestrahlt, vorzugsweise in die Vorzugsrichtung der photochromen Gruppen, so ändert sich die Vorzugsrichtung kontinuierlich mit der Bestrahlungszeit bis zur Orientierung maximal senkrecht zur Polarisationsebene des aktinischen Lichtes. Die neue Vorzugsrichtung wurde polarisationsmikroskopisch und UV/VIS-spektroskopisch ausgewiesen.

### Beispiel 4

Ein Film des smektischen flüssigkristallinen Polymeren Poly-{3[(4-n-hexyloxyphenylcarbonyloxy)cyclohexyloxycarbonylvinylphenoxy]propyl}-methylsiloxan wird durch Spincoaten aus einer Chloroform-Lösung auf eine Quarzplatte aufgebracht.

Die Schicht wird im viskoelastischen Bereich bei 100°C zwei Stunden getempert. Die homöotrope Schicht wird mit unpolarisiertem Licht der Wellenlänge 313 nm einer HBO 500 in Verbindung mit einem Metallinterferenzfilter bei einer Strahlungsintensität von 0,5 mW/cm 140s bildmäßig bestrahlt. Die E-Z-Photoisomerisierung bewirkt eine Zunahme der Extinktion im Bereich der Cinnamoylabsorption und die polarisationsmikroskopisch nachweisbare Umwandlung der homöotropen Orientierung in eine planare Orientierung. Bei Wärmezufuhr geht die Orientierung verloren. Der Prozeß erfolgt im viskoelastischen Bereich und unterhalb der Glastemperatur des Polymeren.

### Beispiel 5

Zwischen zwei Quarzplatten wird in der isotropen Schmelze ein Film des flüssigkristallinen Polymeren Poly-(methacryloyloxyhexyloxy-4-methoxyphenylbenzoat-comethacryloyloxyhexyloxy-4-methyl-stilben) hergestellt und im Magnetfeld 5°C unterhalb des Phasenüberganges nematisch/isotrop homöotrop orientiert. Das Verhältnis zwischen Phenylbenzoatgruppen und photochromen Stilbenseitengruppen beträgt 10:1. Die Zelle wird mit unpolarisiertem Licht der Wellenlänge größer 300 nm unterhalb der Glastemperatur des Polymeren bildmäßig bestrahlt. Mit einem UV/VIS-Spektralphotometer wird in Folge der Lichtexposition eine Zunahme der Extinktion im Bereich der Absorption der Stilbengruppen beobachtet. Da die E-Z-Photoisomerisierung des Polymeren in Lösung stets zu einer Abnahme der Extinktion führt, ist die Exinktionszunahme im anisotropen Film des flüssigkristallinen Polymeren auf eine lichtinduzierte Änderung der optischen Anisotropie durch geänderte Orientierung der photochromen Gruppen zurückzuführen, Polarisationsmikroskopisch wird eine Änderung der Doppelbrechung der flüssigkristallinen Matrix in Folge geänderter Orientierung zwischen bestrahlten und unbestrahlten Arealen beobachtet. Die eingeschriebene Information wird durch Wärmezufuhr gelöscht.

### Beispiel 6

Das flüssigkristalline Speichermedium Poly-(4-methacryloyl-oxy-hexylenoxy-benzoesäure-4'-methoxyanilid-comethacryloyloxyhexylenoxy-azobenzen) befindet sich in einer Speicherzelle.

Eine makroskopische Planarisierung vorgegebener Polarisationsrichtung der flüssigkristallinen Seitenketten wird unter anderem durch großflächiges Bestrahlen der Zelle mit aktinischem linear polarisiertem Licht zwischen 340 und 500 nm erreicht. Diese damit erzielte planare bzw. quasiplanare Orientierung ist Ausgangspunkt für die nachstehend ausgeführten Beispiele der lichtinduzierten Schalt- und Orientierungsprozesse.

Konoskopische Untersuchungen zeigen eindeutig eine großflächige planare Orientierung des flüssigkristallinen Seitenkettenpolymers in der gesamten Zelle.

Die planare Orientierung kann auch durch andere bekannte Orientierungsverfahren erfolgen.

Zur Einspeicherung einer Information wird die Zelle unter Verwendung einer Maske oder eines entsprechend der gewünschten zu speichernden Information abgelenkten punktförmigen Strahles mit linear polarisiertem aktinischem Licht einer Wolframlampe mit der Intensität von I = 1,27. 10⁻⁸ Einstein pro Minute in einem Wellenlängenbereich zwischen 400 und 500 nm bestrahlt. Dabei erfolgt an bestrahlten Stellen unterhalb der Glastemperatur makroskopisch einheitlich eine Umorientierung der Vorzugsrichtung der flüssigkristallinen Seitenketten unter Erhalt der planaren Anordnung.

Diese Umorientierung ist stabil und im Glaszustand des flüssigkristallinen Seitenkettenpolymers fixiert.

Die eingeschriebene Information ist mit nicht aktinischem linear polarisiertem polychromatischem Licht der Wellenlängen größer 550 nm auslesbar.

### Beispiel 7

In eine Zelle wie im Beispiel 6 mit dem Speichermedium werden Bildpunkte mit unterschiedlicher Vorzugsrichtung der flüssigkristallinen Matrix durch unterschiedliche Polarisationsebenen des aktinischen Lichtes eingeschrieben.

Die planare Ausrichtung der flüssigkristallinen Seitenketten erfolgt immer senkrecht zur Schwingungsebene des linear polarisierten aktinischen Lichtes.

Dieser Einschreibprozeß erfolgt unterhalb der Glastemperatur. Die Informationen sind im Glaszustand des Polymers fixiert und lassen sich mit nicht aktinischem linear polarisiertem polycromatischem Licht auslesen.

Damit wird eine reversible optische Informationsspeicherung mit drei Parametern (x-y-Koordinaten und Orientierung) je Bildpunkt realisiert.

### Beispiel 8

Es wird eine Zelle entsprechend Beispiel 6 mit dem Speichermedium verwendet. Durch wiederholte Bestrahlung eines Bildpunktes mit veränderter Polarisationsebene des linear polarisierten aktinischen Lichtes oder mit veränderter Orientierung des planar orientierten Speichermediums zur Polarisationsebene des Einschreibstrahles wird durch Licht zwischen unterschiedlichen Speicherzuständen oder Orientierungen geschaltet.

Die eingeschriebene Information wird mit Licht einer veränderten Polarisationsrichtung überschrieben.

Ermüdet nach mehrfachem Überschreiben die flüssigkristalline Polymermatrix, so kann durch kurzzeitiges Erwärmen über die Glastemperatur das physikalische Altern des Polymers überwunden werden, wobei die zuletzt eingeschriebene Information erhalten bleibt.

### Beispiel 9

Die Orientierung der flüssigkristallinen Matrix wird kontinuierlich in Abhängigkeit von der Intensität der Lichtquelle und der Bestrahlungszeit eingestellt.

Der Prozeß erfolgt bis zur Einstellung der Vorzugsrichtung der Matrix senkrecht zur Polarisationsebene des aktinischen Lichtes.

Damit ist eine bildhafte Darstellung mit unterschiedlichen Intensitäten einschließlich bis zur Sättigung möglich.

Durch Variation der Polarisationsebene, der Bestrahlungszeit und/oder der Bestrahlungsintensität werden beliebige planare Orientierungen der flüssigkristallinen Matrix eingestellt und mit linear polarisiertem nicht aktinischem polychromatischem Licht ausgelesen.

### Beispiel 10

An Stelle des in Beispiel 6 genannten Speichermediums wird Poly-(4-methacryloyloxyhexylenoxy-benzosäure-4'-butoxyanilid-co-methacryloyloxyethyloxyazobenzen) verwendet. Es werden die gleichen Ergebnisse erzielt.

## Patentansprüche

1. Verfahren zur photoinduzierten Orientierung flüssigkristalliner Polymerer und zur reversiblen optischen Informationsspeicherung mittels photoinduziert konformationsveranderlicher flüssigkristalliner Polymerer als Speichermedium, dadurch gekennzeichnet, daß in einem homöotropen, planaren oder makroskopisch desorientierten, durch Spincoaten, Tauchen, Gießen oder durch Pressen oder Einfließen zwischen zwei Glasplatten hergestellten Film eines photoinduziert konformationsveränderlichen flüssigkristallinen Seitenkettenpolymers gemäß einer der folgenden Formeln 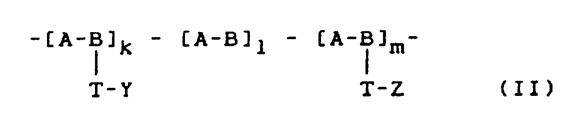 mit k+l+m = 1 und O<k<1 und 0,05 < m < 0,5
oder 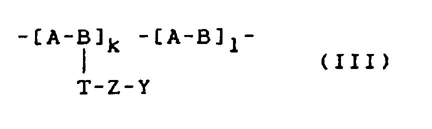 mit k+l = 1 und O<k≤1
worin
A-B die wiederkehrende Einheit der Hauptkette von Polysiloxan, Polyacrylat oder Polymethacrylat,
T eine abstandthaltende Gruppe,
Y eine Gruppe mit mesogenen Eigenschaften, die mindestens eine wasserstoffbrückenbildende Einheit enthält,
Z eine Gruppe mit photoinduziert konformationsveränderlichen Eigenschaften
ist und k, l, m das Verhältnis der Einheiten A-B untereinander bestimmen,
im viskoelastischen Bereich oder unterhalb der Glastemperatur des Polymers bildmäßig oder lokal mit linear polarisiertem oder im Falle eines homöotrop orientierten Films mit polarisiertem oder unpolarisiertem, aktinischen Licht eine Information eingeschrieben wird oder Pixel verschiedener Polarisationsrichtungen eingeschrieben werden und daß bei jedem Einschreibvorgang eine über eine photoinduzierte Konformationsänderung der photoinduziert konformationsveränderlichen Gruppen eine Umorientierung der gesamten Flüssigkristallmatrix bis zu einer Orientierung der in den Seitenketten enthaltenen photoinduziert konformationsveränderlichen und mesogenen Gruppen senkrecht zur Polarisationsebene des Einschreiblichtes erfolgt und makroskopisch einheitlich eine homöotrope Schicht zu einer planaren Schicht und/oder die Vorzugsrichtung einer planaren Schicht durch Variation der Polarisationsebene des Lichtes in beliebige planare Vorzugsrichtungen umorientiert wird.

2. Verfahren nach Anspruch 1, dadurch gekennzeichnet, daß die im Speichermedium gespeicherte Information durch längerwelliges, nicht aktinisches, bevorzugt linear polarisiertes Leselicht punktweise oder flächig ohne Zerstörung der gespeicherten Information ausgelesen wird oder daß die gespeicherte Information oder Orientierung der flüssigkristallinen Matrix durch Licht und/oder Wärme lokal oder flächig gelöscht wird.

3. Verfahren nach einem der Ansprüche 1 und 2, dadurch gekennzeichnet, daß der Einschreib-, Lese- und/oder Löschprozeß mehrfach wiederholbar ist.

4. Verfahren nach Anspruch 1, dadurch gekennzeichnet, daß die durch Y in den Formeln (II) und (III) dargestellte Gruppe mit mesogenen Eigenschaften als wasserstoffbrückenbildende Einheit eine der Gruppierungen -CO-NH-, -NH-CO- und -C(R₄)=C(R₄)-CO-NH-enthält, wobei R₄ für H, CH₃ oder CN steht.

5. Verfahren nach einem der Ansprüche 1 bis 3, dadurch gekennzeichnet, daß als polymeres Speichermedium photoinduziert konformationsveränderliche flüssigkristalline Homo- oder Copolymere einer der Formel II und III verwendet werden, in denen A-B die wiederkehrende Einheit der Hauptkette von Polysiloxan, Polyacrylat oder Polymethacrylat bedeutet und die durch Z dargestellte Gruppe mit photoinduziert konformationsveränderlichen Eigenschaften einer der Formeln VI und V entspricht: 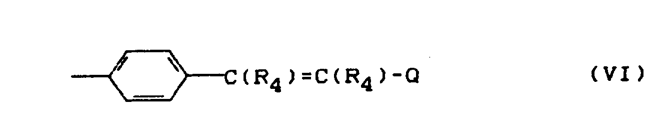 worin Q und R₄ bedeuten:
a) -COOR₆, mit
R₆ = C₁-C₆ Alkyl, 4-Alkylcylohexyl, 4-Alkylphenyl, 4-Alkoxyphenyl, Cylohexyl-4-carbonsäure-4'-alkylphenylester, Cyclohexyl-4-carbonsäure-4'-alkyl-cyclohexylester, Cholesteryl oder Cholestanyl und
R₄ = H
b) 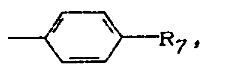 mit
R₇ = H, Alkyl, O-Alkyl, Halogen, CN oder CF₃ und
R₄= H, Alkyl oder CN
c) R₉, mit
R₉ = Pyridyl oder Pyrimidyl und
R₄ = H
oder
d) 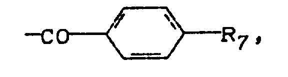 mit
R₇ = H, Alkyl, O-Alkyl, Halogen, CN oder CF₃ und
R₄ = H 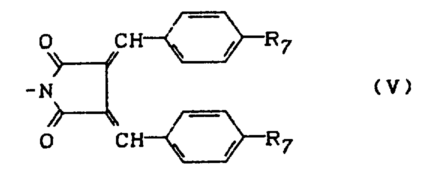
worin R₇ H, Alkyl, O-Alkyl, Halogen, CN oder CF₃ bedeutet.

6. Verfahren nach einem der Ansprüche 1 bis 5, dadurch gekennzeichnet, daß als Speichermedium eine der folgenden Verbindungen verwendet wird:
a) Poly-(4-methacryloyl-oxy-hexylenoxy-benzoesäure-4'-methoxyanilid-co-methacryloyloxyhexylenoxy-azobenzen)
b) Poly-(methacryloyloxyhexyl-oxy-4-methoxyphenylbenzoat-co-methacryloyloxyhexyloxy-4-methoxystilben)
c) Poly-{3[(4-cholesteryl)oxycarbonylvinylphenoxy]propyl}-methylsiloxan
d) Poly-{3[(4-propylcyclohexyl)oxycarbonylvinylphenoxy]propyl}-methylsiloxan
e) Poly-{3[(4-n-hexyloxyphenylcarbonyloxy)cyclohexyloxycarbonylvinylphenoxy]propyl}-methylsiloxan

7. Verfahren nach einem der Ansprüche 1 bis 6, dadurch gekennzeichnet, daß die Wellenlänge des Bestrahlungslichtes an die Absorption der photoinduziert konformationsveränderlichen Gruppen des verwendeten Seitenkettenpolymers angepaßt ist und das photostationäre Gleichgewicht zwischen den E-und Z-Photoisomeren mit hohen Quantenausbeuten und hohem Anteil an Z-Photoisomeren durch Bestrahlung mit jeweils geeigneten Wellenlängen eingestellt wird.

8. Verfahren nach einem der Ansprüche 1 bis 7, dadurch gekennzeichnet, daß durch eine wiederholte Photoselektion der photoinduziert konformationsveränderlichen Gruppen mit veränderter Polarisationsebene des Lichtes oder mit veränderter Orientierung des planar orientierten Speichermediums zur Polarisationsebene des Einschreiblichtes zwischen verschiedenen Vorzugsrichtungen oder Speicherzuständen wiederholt geschaltet wird und Informationen oder Orientierungen korrigiert oder überschrieben werden.

9. Verfahren nach einem der Ansprüche 1 bis 8, dadurch gekennzeichnet, daß aus Schichten mit Domänen verschiedener Vorzugsrichtung oder aus makroskopisch einheitlich homöotrop orientierten Schichten photoinduziert konformationsveränderlicher flüssigkristalliner Polymerer flächig orientierte Schichten und unter Verwendung von linear polarisiertem Licht flächig orientierte Schichten mit einer Vorzugsrichtung durch lichtinduzierte Orientierung hergestellt werden.

## Claims

1. Process for the photoinduced alignment of liquid-crystalline polymers and for reversible optical information storage using, as storage medium, liquid-crystalline polymers which can be caused to undergo a photoinduced change in conformation, characterized in that a piece of information or pixels having different polarization directions are written in a homeotropic, planar or macroscopically unaligned film, produced by spin-coating, dipping, casting or pressing or by introduction between two glass plates, of a liquid-crystalline side-chain polymer which can be caused to undergo a photoinduced change in conformation, having one of the following formulae 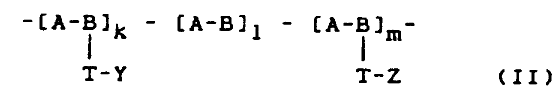 where k+l+m = 1 and 0 < k < 1 and 0.05 < m < 0.5
or 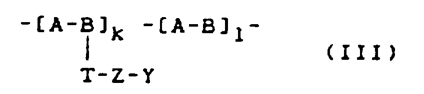 where k+l = 1 and 0 < k ≤ 1,
in which
A-B is the recurring unit of the main chain of polysiloxane, polyacrylate or polymethacrylate,
T is a spacer group,
Y is a group having mesogenic properties which contains at least one unit which forms hydrogen bridges,
Z is a group having properties which can be caused to undergo a photoinduced change in conformation,
and k, l and m determine the ratio of the units A-B to one another,
in the viscoelastic region or below the glass transition temperature of the polymer, imagewise or locally using linear-polarized or, in the case of a homeotropically aligned film, using polarized or unpolarized, actinic light, and in that, during each writing operation, a realignment takes place, via a photoinduced change in conformation of the groups which can be caused to undergo a photoinduced change in conformation, of the entire liquid-crystal matrix including alignment, perpendicular to the polarization plane of the writing light, of the groups which can be caused to undergo a photoinduced change in conformation and the mesogenic groups present in the side chains, and, in a macroscopically uniform manner, a homeotropic layer is realigned to give a planar layer and/or the preferential direction of a planar layer is realigned to any desired planar preferential directions by variation of the polarization plane of the light.

2. Process according to Claim 1, characterized in that the information stored in the storage medium is read pointwise or over the entire area without destroying the stored information by means of relatively long-wave, non-actinic, preferably linear-polarized reading light, or in that the stored information or alignment of the liquid-crystalline matrix is erased locally or over the entire area by light and/or heat.

3. Process according to one of Claims 1 and 2, characterized in that the writing, reading and/or erasing process can be repeated many times.

4. Process according to Claim 1, characterized in that the group having mesogenic properties which is represented by Y in the formulae (II) and (III) contains, as hydrogen-bridge-forming unit, one of the groups -CO-NH-, -NH-CO- and -C(R₄)=C(R₄)-CO-NH-, where R₄ is H, CH₃ or CN.

5. Process according to one of Claims 1 to 3, characterized in that the polymeric storage medium used is a liquid-crystalline homopolymer or copolymer which can be caused to undergo a photoinduced change in conformation, having one of the formulae II and III in which A-B is the recurring unit of the main chain of polysiloxane, polyacrylate or polymethacrylate, and the group represented by Z having properties which can be caused to undergo a photoinduced change in conformation conforms to one of the formulae VI and V: 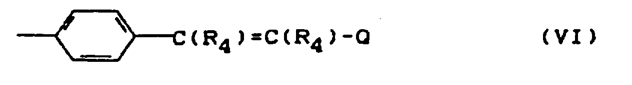 in which Q and R₄ are:
a) -COOR₆, where
R₆ = C₁-C₆ alkyl, 4-alkylcyclohexyl, 4-alkylphenyl, 4-alkoxyphenyl, 4'-alkylphenyl cyclohexyl-4-carboxylate, 4'-alkyl-cyclohexyl cyclohexyl-4-carboxylate, cholesteryl or cholestanyl, and
R₄ = H,
b) 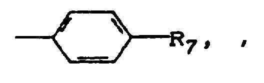 where
R₇ = H, alkyl, O-alkyl, halogen, CN or CF₃, and
R₄ = H, alkyl or CN,
c) R₉, where
R₉ = pyridyl or pyrimidyl, and
R₄ = H,
or
d) 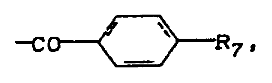 where
R₇ = H, alkyl, O-alkyl, halogen, CN or CF₃, and
R₄= H, 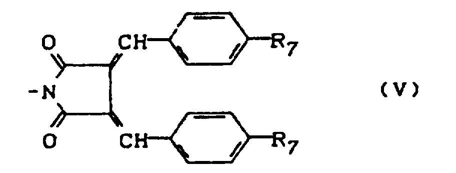
in which R₇ is H, alkyl, O-alkyl, halogen, CN or CF₃.

6. Process according to one of Claims 1 to 5, characterized in that the storage medium used is one of the following compounds:
a) 4-methacryloyloxyhexyleneoxy-4'-methoxybenzanilidemethacryloyloxyhexyleneoxyazobenzene copolymer
b) 4-methoxyphenyl methacryloyloxyhexyloxybenzoatemethacryloyloxyhexyloxy-4-methoxystilbene copolymer
c) poly{3-[(4-cholesteryl)oxycarbonylvinylphenoxy]-propyl}methylsiloxane
d) poly{3-[(4-propylcyclohexyl)oxycarbonylvinylphenoxy]propyl}methylsiloxane
e) poly{3-[(4-n-hexyloxyphenylcarbonyloxy)cyclohexyloxycarbonylvinylphenoxy]propyl}methylsiloxane.

7. Process according to one of Claims 1 to 6, characterized in that the wavelength of the irradiation light is matched to the absorption of the groups which can be caused to undergo a photoinduced change in conformation in the side-chain polymer used, and the photostationary equilibrium between the E- and Z-photoisomers is adjusted with high quantum yields and a high content of Z-photoisomers by irradiation with suitable wavelengths in each case.

8. Process according to one of Claims 1 to 7, characterized in that repeated switching between various preferential directions or storage states is effected by repeated photoselection of the groups which can be caused to undergo a photoinduced change in conformation with a changed polarization plane of the light or with a changed alignment of the planar-aligned storage medium to the polarization plane of the writing light, and information or alignments are corrected or overwritten.

9. Process according to one of Claims 1 to 8, characterized in that layers aligned over the entire area are produced from layers having domains of different preferential direction or from layers of liquid-crystalline polymers which can be caused to undergo a photoinduced change in conformation, which layers are homeotropically aligned in a macroscopically uniform manner, and layers which are aligned over the entire area and have a preferential direction are produced by photoinduced alignment using linear-polarized light.

## Revendications

1. Procédé d'orientation photo-induite de polymères en cristaux liquides et d'enregistrement optique réversible d'informations au moyen de polymères en cristaux liquides dont la conformation peut être modifiée de façon photo-induite servant de support d'enregistrement, caractérisé en ce que dans un film homéotrope, planaire ou non orienté macroscopiquement, préparé par application par centrifugation, immersion, coulée, injection ou pressage entre deux plaques de verre, réalisé en un polymère à chaînes latérales, en cristaux liquides, dont la conformation peut être modifiée de façon photo-induite, d'une des formules ci-dessous: 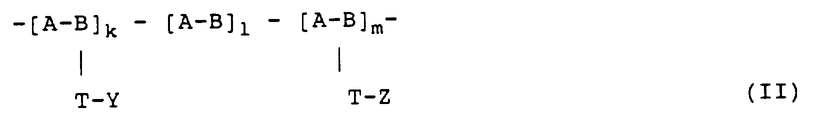 avec k + l + m = 1 ou 0 < k < 1 et 0,05 < m < 0,5
ou 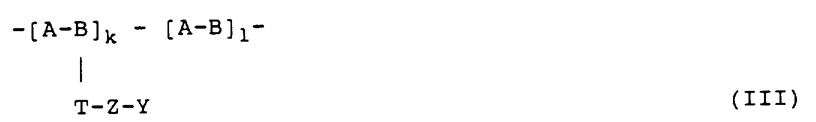 avec k + l = 1 et 0 < k ≤ 1
dans lesquelles
A-B représente une unité récurrente de la chaîne principale de polysiloxane, de polyacrylate ou de polyméthacrylate,
T représente un groupe maintenant l'écartement,
Y représente un groupe présentant les propriétés mésogènes, qui contient au moins une unité formant des ponts hydrogène,
Z représente un groupe présentant des propriétés de modification photo-induite de sa conformation,
et k, l, m définissent le rapport mutuel des unités A-B,
une information est inscrite ou des pixels dont la direction de polarisation est différente sont inscrits, dans la région viscoélastique ou en dessous de la température de transition vitreuse du polymère, suivant des motifs ou localement, avec une lumière polarisée linéairement, ou dans le cas d'un film orienté de manière homéotrope, avec de la lumière actinique polarisée ou non polarisée, et en ce que lors de chaque opération d'écriture, il s'effectue par l'intermédiaire d'une modification photo-induite de la conformation des groupes dont la conformation peut être modifiée de manière photo-induite, une réorientation de l'ensemble de la matrice du cristal liquide, jusque dans une orientation des groupes mésogènes dont la conformation peut être modifiée de manière photo-induite qui sont contenus dans les chaînes latérales, qui est perpendiculaire au plan de polarisation de la lumière d'écriture, et de manière macroscopiquement uniforme, une couche homéotrope est réorientée en une couche planaire, et/ou la direction préférentielle d'une couche planaire est réorientée dans des directions préférentielles planaires quelconques, par modification du plan de polarisation de la lumière.

2. Procédé selon la revendication 1, caractérisé en ce que les informations enregistrées sur le support d'enregistrement par une lumière de lecture de grande longueur d'onde, non actinique, de préférence linéairement polarisée, sont lues localement ou par zones, sans destruction des informations enregistrées, ou en ce que les informations enregistrées ou l'orientation de la matrice des cristaux liquides sont effacées, localement ou par zones, par la lumière ou par la chaleur.

3. Procédé selon l'une des revendications 1 et 2, caractérisé en ce que les processus d'écriture, de lecture et/ou d'effacement peuvent être répétés plusieurs fois.

4. Procédé selon la revendication 1, caractérisé en ce que le groupe à propriétés mésogènes représenté par Y dans les formules (II) et (III) contient comme unité formant des ponts hydrogène une des combinaisons -CO-NH-, NH-CO- et -C(R₄)=C(R₄)-CO-NH-, R₄ représentant H, CH₃ ou CN.

5. Procédé selon l'une des revendications 1 à 3, caractérisé en ce que l'on utilise comme support d'enregistrement polymère des homopolymères ou copolymères en cristaux liquides dont la conformation peut être modifiée de manière photo-induite d'une des formules II et III, dans lesquelles A-B représente l'unité récurrente de la chaîne principale de polysiloxane, de polyacrylate ou polyméthacrylate, et le groupe représenté par Z et présentant des propriétés de modification photo-induite de sa conformation correspond à une des formules VI et V: 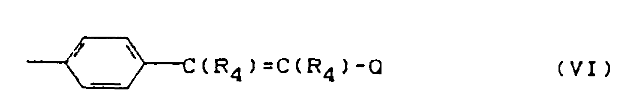 dans laquelle Q et R₄ représentent:
a) -COOR₆, avec R₆ = un alkyle en C₁ à C₆, un 4-alkylcyclohexyle, un 4-alkylphényle, un 4-alcoxyphényle, un cyclohexyl-4-acide carboxylique-4'-alkyl-phénylester, un cyclohexyl-4-acide carboxylique-4'-alkyl-cyclohexylester, un cholestéryle ou un cholestanyle, et R₄ = H
b) 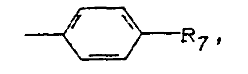 avec R₇ = H, un alkyle, un O-alkyle, un halogène, CN ou CF₃ et
R₄ = H, un alkyle ou CN
c) R₉, avec R₉ = pyridyle ou pyrimidyle et R₄ = H ou
d) 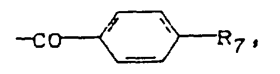 avec R₇ = H, un alkyle, un O-alkyle, un halogène, CN ou CF₃, et
R₄ = H, 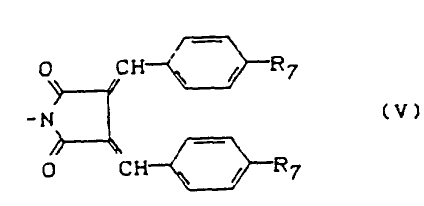 dans laquelle R₇ représente H, un alkyle, un O-alkyle, un halogène, CN ou CF₃.

6. Procédé selon l'une des revendications 1 à 5, caractérisé en ce que l'on utilise comme support d'enregistrement un des composés ci-dessous:
a) le poly-(4-méthacryloyl-oxy-hexylènoxy-acide benzoïque-4'-méthoxyanilide-co-méthacryloyloxyhexylénoxy-azobenzène)
b) le poly-(méthacryloyloxyhexyl-oxy-4-méthoxy-phénylbenzoate-co-méthacryloyloxyhexyloxy-4-méthoxystilbène)
c) le poly-{3[(4-cholestéryl)oxycarbonylvinylphénoxy]-propyl}-méthylsiloxane
d) le poly-{3[(4-propylcyclohexyl)oxycarbonylvinylphénoxy]-propyl}-méthylsiloxane
e) le poly-{3[(4-n-hexyloxyphénylcarbonyloxy)-cyclohexyloxycarbonylvinylphénoxy]-propyl} -méthylsiloxane.

7. Procédé selon l'une des revendications 1 à 6, caractérisé en ce que la longueur d'onde de la lumière d'irradiation est adaptée à l'absorption des groupes dont la conformation peut être modifiée de manière photo-induite du polymère à chaînes latérales utilisé, et l'équilibre photo-stationnaire entre les photoisomères E et Z est établi avec des rendements quantiques élevés et une teneur élevée en photoisomères Z, par irradiation dans chaque cas à des longueurs d'onde appropriées.

8. Procédé selon l'une des revendications 1 à 7, caractérisé en ce qu'une commutation est réalisée, et des informations ou des orientations sont corrigées ou écrasées, par une photosélection répétée des groupes dont la conformation peut être modifiée de manière photo-induite, en modifiant le plan de polarisation de la lumière ou en modifiant l'orientation du support d'enregistrement orienté planairement par rapport au plan de polarisation de la lumière d'inscription, entre différentes directions préférentielles ou états d'enregistrement.

9. Procédé selon l'une des revendications 1 à 8, caractérisé en ce que, par orientation induite par la lumière, des couches orientées planairement de polymères en cristaux liquides dont la conformation peut être modifiée de manière photo-induite sont préparées à partir de couches présentant des domaines avec une orientation préférentielle différente ou à partir de couches orientées de manière homéotrope de manière macroscopiquement uniforme, et des couches orientées planairement avec une direction préférentielle sont préparées par recours à de la lumière linéairement polarisée.
